# EUROPEAN PATENT SPECIFICATION

(11) **EP 0 991 455 B1**
(45) Date of publication and mention of the grant of the patent: **24.11.2004**
(21) Application number: 98930901.8
(22) Date of filing: 19.06.1998
(51) Int. Cl.: B01D 11/04, B01D 11/02, B01D 3/06, B01D 1/18, B01J 2/02

(54) **TREATMENT OF A SUBSTANCE WITH A DENSE FLUID (E.G. WITH A SUPERCRITICAL FLUID)**
BEHANDLUNG EINER SUBSTANZ MIT EINEM VERDICHTETEN FLUID ( Z.B MIT EINEM ÜBERKRITISCHES FLUID )
TRAITEMENT D'UNE SUBSTANCE PAR UN FLUIDE DENSE (PAR EXEMPLE, UN FLUIDE SUPERCRITIQUE)

(30) Priority: 20.06.1997 GB 9712945; 16.08.1997 GB 9717344
(43) Date of publication of application: 12.04.2000
(73) Proprietor: SmithKline Beecham plc, Brentford, Middlesex TW8 9GS (GB); THE UNIVERSITY OF BIRMINGHAM, Edgbaston, Birmingham B15 9TB (GB)
(72) Inventor: KING, Michael, Blackshaw, Edgbaston, Birmingham B15 2TT (GB); ROBERTSON, John-The University of Birmingham, Edgbaston,Birminghamm B15 2TT (GB)
(74) Representative: Walker, Ralph Francis, Dr.
(86) International application number: PCT/GB1998/001800
(87) International publication number: WO 1998/058722

(56) References cited:
- EP-A- 0 384 969
- EP-A- 0 692 289
- US-A- 4 734 451
- US-A- 4 770 780
- US-A- 5 011 819

## Description

This invention relates to a.process and apparatus for the precipitation of solid solutes from solution. More particularly the invention relates to a process for the modification of the particle form of a solid solute by formation of a solution of the solute in a Dense Fluid Solvent followed by precipitation of the solute from the solution by expansion of the Dense Fluid Solvent.

"A Dense Fluid Solvent", as referred to herein, is a fluid under such conditions whereby its molar volume and solvating power can be significantly altered by varying the temperature and pressure of the fluid. Examples of such Dense Fluid Solvents include supercritical or near-critical fluids, high pressure fluids, as well as certain vapour-liquid mixtures.

Rapid Expansion of Supercritical Solutions (RESS) is a known process, see for example J. Controlled Release 24 (1993) 27-44. RESS provides a means of particle production for the processing of solutes. The solvent power of a supercritical fluid is a sensitive function of density. Therefore by manipulating the pressure and temperature of the fluid, changes in solvent power can be brought about. RESS is one method of particle production from supercritical fluids, during which the solute of interest is dissolved in the supercritical fluid; the resulting solution can then be rapidly expanded (<10⁻⁵ S) through a restriction (generally a capillary or orifice type nozzle). As the fluid is highly compressible, a rapid decrease of the fluid density is brought about. This rapid decrease in density (and hence rapid decrease in solvent power) causes a sudden precipitation of solute. As supersaturation ratios are high and essentially uniform conditions are obtained in the nucleating medium the solids precipitate as minute almost monodisperse particles. US-A-5,011,819 discloses a process in which a solution of a superconductor material in a supercritical fluid is expanded to precipitate the material without a phase change of the fluid.

Another method of particle production, using supercritical fluids is the Gas Anti-Solvent (GAS) process. This is generally used when the solute of interest is insoluble in the supercritical fluid. The solute is therefore dissolved in a conventional solvent and the supercritical fluid is then contacted with this solution, dissolves in the solvent and displaces the solute.

Another known method of particle production using Dense Fluid Solvent is the Particles from Gas Saturated Solution (PGSS) process, in which a gas in a compressed state is dissolved in a molten solid. When the pressure is released the expansion of the gas atomises the solid.

To date, a variety of supercritical fluids have been used as solvents in RESS, GAS and PGSS processes, e.g. ethane, chlorofluoromethane, carbon dioxide and fluoroform. However carbon dioxide is the most common supercritical solvent, mainly due to the fact that it is cheap, non-flammable, non-toxic and environmentally benign. US-A-4,770,780 discloses a liquid-liquid extraction process using liquid carbon dioxide.

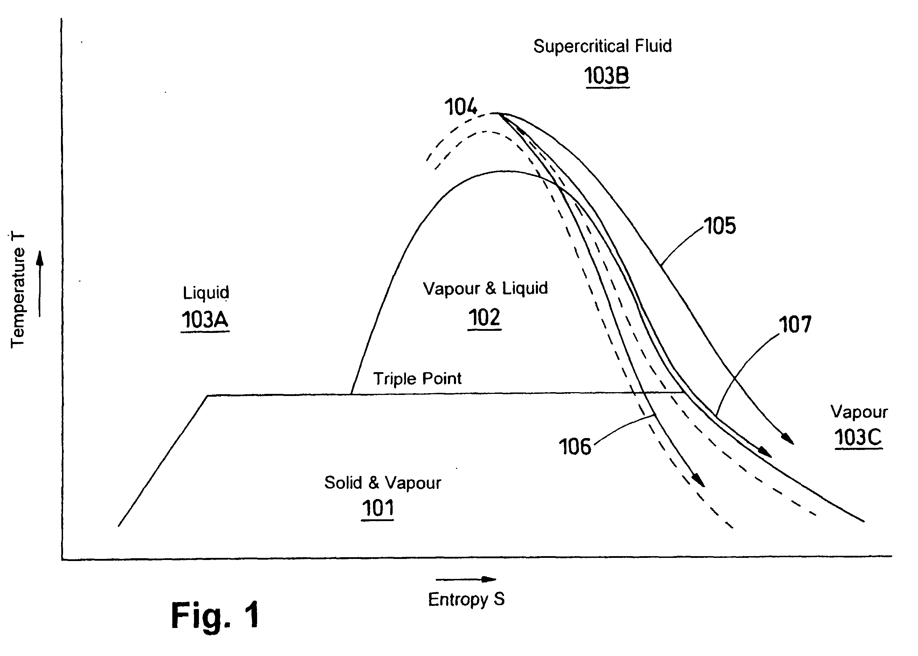

The temperature / entropy phase diagram for carbon dioxide is shown in Fig. 1. This comprises a solid / vapour region 101, a vapour / liquid region 102, and a region 103 wherein the carbon dioxide passes through a continuum from liquid 103A through a supercritical fluid 103B to vapour 103C. Generally when the solvent is initially under temperature and pressure conditions such that it is in the supercritical region 103B, expansion of the solvent e.g. in a RESS process to increase entropy causes the solvent to enter the vapour region 103C. If the solvent contains a dissolved solute then this expansion and subsequent lowering of the solvent power of the compressed fluid will cause precipitation of the solute. In known RESS processes the expansion of the supercritical solution follows a pathway 105 such that the solution starts at a point 104 in the Dense Fluid Region, remains in the continuum 103, and passes directly from the supercritical phase into the vapour phase.

Expansion of a solution in a single step whereby the solvent is initially in a supercritical state to a point where the solvent is in a vapour state involves pre-expansion temperatures which can be high enough to cause degradation of very heat sensitive solutes such as pharmaceutical compounds. It is an object of the present invention to provide at least a partial solution to this problem. Further aspects, objects and advantages of the present invention will be apparent from the following description.

According to a first aspect of this invention a process for the precipitation of a solid solute from a Dense Fluid Solvent is provided according to claim 1.

It is difficult to define how close to the boundary with a two phase region whilst being in the vapour region the Dense Fluid Solvent should be in the process of this first aspect of the invention to achieve its effects, because in practice such phase boundaries can be ill-defined rather than sharp boundaries. Solely for the purpose of defining some numerical limit in the definition of this invention the term " in the vapour region close to the boundary with a two phase region" used herein is intended to *inter alia* include points on the temperature / entropy phase diagram +10% greater in the entropy axis direction of the temperature / entropy phase diagram than the actual vapour phase - two phase boundary.

The process of the invention includes the additional process steps of causing or allowing the residual solvent which is in part in a solid or liquid state to evaporate, and collecting the precipitated solute.

The process of the invention appears to be suitable for use with any solute which is soluble in and not disadvantageously chemically reactive with the Dense Fluid Solvent when this is in the Dense Fluid Solvent state, e.g. in a supercritical fluid state. Such solutes may be pharmaceutical compounds e.g. drug solutes.

The present invention is applicable for any Dense Fluid Solvent. Examples of suitable Dense Fluid Solvents include carbon dioxide, ethane, ethylene, propane, fluorocarbons, and water, or mixtures thereof, under appropriate physical conditions to be in a Dense Fluid Solvent, e.g. supercritical fluid state or compressible liquid state.

The solution of the solute in the Dense Fluid Solvent may be formed by any of the known methods for forming such solutions. Typically this method may involve passing a flow of the Dense Fluid Solvent, e.g. a supercritical fluid through a column or other vessel containing the solute, thereby bringing the Dense Fluid Solvent and solute into contact to form a solution. Preferably in the process of this first aspect of the invention the conditions, most significantly pressure and temperature, are such that the first condensable fraction of solute material is a liquid phase, for example a molten solid. For example the temperature of the solution may be above the melting point, at the pressure of the solution, of a solute which is a solid. Such a temperature may easily be determined experimentally or may be found in the literature.

The process of the invention may be operated over a range of solution concentrations of the solute in the Dense Fluid Solvent, but suitably the process may be operated with the Dense Fluid Solvent saturated with the solute. It will be understood by those skilled in the art that the solubility of solutes in Dense Fluid Solvents such as supercritical fluids is highly dependent upon the pressure of the fluid.

The solution so formed may be expanded using methods which are known in the art, for example, expansion through an orifice downstream of which is an expansion region, e.g. the interior of an expansion vessel. Various devices are known which comprise such an orifice e.g. and are suitable for use in the process of this invention. One such device simply comprises a flat plate with a single orifice therethrough defining the restriction, and is generally known as an "Orifice Plate Nozzle". Variations of this type of device include a "Capillary Tube Nozzle", in which the orifice is in the form of a long thin tube (capillary) (see for example D. W. Matson et al, Ind. Eng. Chem. Res. 26 (1987)) and a "Porous Plate Nozzle" which comprises many orifices or capillaries (see for example C. Domingo et al, J. Crystal Growth 166 (1996) 989). One or more of such orifices in an array may be used. An alternative device incorporating a valve sold by Hoke Inc. of Cresskill, New Jersey, USA is also known. A suitable construction of pressure-relief valve and orifice has been devised in relation to this invention and is described below.

Downstream of the orifice there will normally be an expansion region at a lower, post-expansion pressure to that of the Dense Fluid Solvent, e.g. a supercritical fluid, into which the solution can expand and in which precipitation of the solute occurs.

In accordance with the invention, the expansion of the solution in the Dense Fluid Solvent is carried out under conditions such that the solution passes from a Dense Fluid Region, into a two-phase region of its phase diagram. In terms of the phase diagram shown in Fig 1, passage from a Dense Fluid Solvent region to a two-phase vapour + liquid then a two-phase solid + vapour region is represented by pathway 106. Passage from a Dense Fluid Solvent region to a region in the vapour phase close to the boundary with the two-phase region which is not in accordance with the invention is represented by pathway 107. Preferably the pathway followed is such that the solution enters a solid / vapour region on expansion. In general, although not without exception, if the solution passes into a vapour-liquid region a solid solute tends to precipitate in a fibrous physical form, and if the solution passes into a vapour-solid region a solid solute tends to precipitate in a granular physical form, the latter being preferred for processing purposes, e.g. for powder handling in the manufacture of pharmaceutical products.

The expansion of the solution in the Dense Fluid Solvent to follow such pathways through the phase diagram may preferably be achieved in the process of this invention by performing the expansion under conditions such that the solvent expands in a manner that is or approximates to an isenthalpic pathway. For many substances which show Dense Fluid Solvent regions in their phase diagrams suitable conditions of temperature and pressure which define isenthalpic pathways across the phase diagram are known, and are illustrated in the literature, e.g. for carbon dioxide in Perry's "Chemical Engineer's Handbook". Isenthalpic pathways for such substances which follow a pathway such that the that the Dense Fluid Solvent passes from the Dense Fluid Solvent region of its phase diagram into a two-phase region of its phase diagram, or into a region of its phase diagram in the vapour region close to the boundary with a two phase region are hence known. Two typical isenthalpic pathways are shown by the two dotted lines ---- in Fig. 1. Many other isenthalpic pathways exist and will be apparent to those skilled in the art.

Preferably in the process of the invention the pathway the solution follows through the temperature/entropy phase diagram is controlled by the post-expansion pressure, i.e. the pressure in the expansion region into which the solution expands downstream of the restriction. The post-expansion pressure may be sub-atmospheric, atmospheric, or between atmospheric and the pressure of the Dense Fluid Solvent before expansion (i.e. the pre-expansion pressure). For example for carbon dioxide as a supercritical fluid solvent the post-expansion pressure may be less than the critical pressure (ca. 72 bar). In the process of this invention a preferred post expansion pressure for carbon dioxide is in the ranges 1-50 bar, especially 1-30 bar, particularly 1-10 bar, most preferably around atmospheric pressure.

Preferably in the process of the invention, to carry out the expansion of the solution isenthalpically, the expansion is carried out extremely rapidly, so that as little heat as possible is transferred to the expanding solution. Suitably rapid expansion may for example be achieved by expansion through a 25-50 µm diameter by 25 µm long orifice of the kind discussed above. A plurality of orifices, or an expansion apparatus of a suitably large scale may be used to achieve an industrial scale process. Suitable ways of adapting the process of the invention to an industrial scale will be apparent to those skilled in the art, e.g. of chemical engineering.

In the process of the invention after precipitation has occurred the former Dense Fluid Solvent is present as a vapour-liquid mixture or a solid-vapour mixture (plus the precipitated solute). Therefore the precipitated solute is isolated from the former Dense Fluid Solvent by evaporation of the former solvent. In the case of carbon dioxide for example heat can be applied to the expansion vessel, if desired. In the case where the carbon dioxide is a vapour-liquid mixture, sufficient heat may be put into the expansion vessel so as to evaporate any liquid carbon dioxide, and the precipitated solute may then be removed from the vessel. In the case where the carbon dioxide is a solid-vapour mixture the solid carbon dioxide may settle out with the precipitating solute and sublime to leave the precipitated solute. This rate of sublimation can be enhanced by heating the expansion vessel.

In a preferred form of the process of this invention, the process is used to modify the physical form of the solute. For example the solute may be initially in a first physical form in which form it is dissolved in the Dense Fluid Solvent, and the solute may be precipitated from solution, and subsequently isolated from the solvent, in a second physical form having different physical characteristics to the first physical form. This may be used to modify such physical characteristics of the solute as particle size and surface area, particle habit, porosity, crystal structure and bulk powder properties such as density and flowability.

For example the process of the invention may advantageously be used to convert the solute from a first physical form of low particle surface area into a second physical form of higher surface area, from a first physical form such as needle shaped crystals which are susceptible to "matting" with poor bulk flow properties, into a second physical form of more isometric or more spherical crystals of higher bulk density and/or with better bulk flow properties, or from particles of low porosity to a form of increased porosity. Such modifications of the physical form are of benefit in bulk powder processing for example in the manufacture of pharmaceutical dosage forms.

A further advantage of the process of the invention may be observed in that the extent of degradation of sensitive solutes such as drug compounds may be reduced relative to known RESS processes in which expansion of the solution directly into the vapour phase, without entering a two-phase region, occurs.

. In the process of the invention two or more solutes may be formed into solution in the Dense Fluid Solvent, for example to form a mixed precipitated product. Additionally or alternatively the solution may comprise a mixture of two or more Dense Fluid Solvents, or a mixture of one or more Dense Fluid Solvents with one or more liquid co-solvents or entrainers. Additionally or alternatively the solution may include non-dissolved particles, or the expansion vessel may contain particles e.g. in the form of a cloud, so that on expansion a matrix of the particles and the precipitated solute is formed, or the particles become coated by the precipitated solute, or the precipitated solute becomes coated by the particles. The process of the invention may be operated as a batch process, or as a continuous or semicontinuous process.

An apparatus for carrying out the process of this invention may comprise:
means for pressurising a Dense Fluid Solvent;
means for dissolving the solute in the Dense Fluid solvent so as to form a solution therein;
a flow path between said pressurising and said dissolving means;
an expansion device through which the solution may pass and may expand on the downstream side of the device;
a flow path between said dissolving means and the expansion device;
an expansion vessel which incorporates an expansion region into which the solution can pass, the expansion region being downstream of the expansion device, the pressure and temperature conditions in the expansion region being such that during or after expansion the solvent passes from the Dense Fluid Solvent region of its phase diagram into a two-phase region of its phase diagram.

Such an apparatus further incorporating a novel pressure-relief valve has been devised which is particularly effective in use with the process of the present invention, but also with other processes using a Dense Fluid Solvent for the processing of a substance, for example a substance which can dissolve, i.e. is a solute in the Dense Fluid Solvent.

This novel pressure-relief valve has a body, an inlet for said solution, an outlet, a flow passage defined by an inner surface of said body extending between said inlet and outlet, a pressure-relief orifice located within said flow passage, and means for varying the effective flow area of the orifice, wherein the orifice and outlet are mutually disposed such that the orifice faces the outlet and from each point in the effective flow area of the orifice, there is a substantially uninterrupted linear flow path through the outlet.

Preferably the outlet of the pressure-relief valve extends downwardly away from the pressure-relief orifice. More preferably the outlet is flared such that its effective flow area increases away from the orifice. Thus any accretion of substance, especially solids, which does occur in the outlet is less likely to block the outlet. Accretion is most likely to be problematic when the substance being processed is a solid when it separates (precipitates) from solution.

The pressure-relief valve may be provided with at least one additional inlet in the outlet of the body. Such additional inlet(s) may be used to feed additional substances, e.g. additional reagents, solvents, particles etc. into the outlet stream, or a purge fluid (preferably gas) into the outlet to dislodge any accreted substance.

The pressure-relief valve may be provided with a valve stem and a valve seat, the valve stem being aligned with the outlet, so that the pressure-relief orifice is defined therebetween, and the valve stem and valve seat being moveable relative to each other so defining the means for varying the effective flow area of the pressure relief valve.

The valve stem may be reciprocated, suitably rapidly, relative to the orifice to generate shock waves in the flow path thereby to dislodge any accreted substance.

Preferably the apparatus also includes temperature control means. Most preferably said temperature control means are located such that the temperature of the Dense Fluid Solvent may be varied both before and after dissolution of the solute, and after passing through the expansion device.

Preferably, the dissolving means comprises an extraction vessel. In use, the solute to be processed is provided, e.g. deposited in the extraction vessel and Dense Fluid Solvent is passed therethrough, so dissolving the solute.

Preferably the expansion device comprises a restriction in the flow path, such as a capillary or orifice type nozzle.

Suitable individual items of equipment which can be assembled to form an apparatus for the process of this invention will be apparent to those skilled in the art, as will be methods of operating such an apparatus so as to carry out processes of this invention.

It is to be understood that due to the pressure drop as the solution passes through the pressure-relief orifice, the solvating power of the Dense Fluid Solvent is reduced to such an extent that the substance at least partially separates from solution, and the design of the flow passage downstream of the orifice permits free discharge of the separated substance through the outlet.

The process of this aspect of the invention is suitable for use with any Dense Fluid Solvent, for example as discussed above. The Dense Fluid Solvent, e.g. carbon dioxide, may be in several states immediately after expansion, e.g. after the rapid pressure drop, depending upon the pre-expansion pressure and temperature and the post-expansion pressure and temperature. For example the former Dense Fluid Solvent may be a gas, e.g. a gas in the vapour region close to the boundary with a two phase region. When it is a gas the majority of the condensing substance may be separated simply by allowing it to settle in the expansion chamber, and any final traces of the substance may be separated by scrubbing the gas with a filter. The process of this aspect of the invention may therefore be a RESS type process. Alternatively the former Dense Fluid Solvent can be a two-phase mixture, for example a vapour-liquid mixture or a vapour-solid mixture, in which case the process can be a process of the first aspect of this invention. Preferably the substance is a solid solute, although the process of this aspect of the invention may be suitable for semisolid (e.g. waxy), or liquid (low or high viscosity) solutes. As above, preferably in the process of this aspect of the invention the conditions, most significantly pressure and temperature, are such that the first condensable fraction of solute material is a liquid phase, for example a molten solid.

The present invention is not to be limited by any particular theory as to how solid particles of a substance, e.g. a solute, are formed, but it is believed that RESS and PGSS type processes occur. For example if the solute is a solid in a molten state, expansion of the solution may result in condensation of material which comprises small droplets of the molten solute containing the Dense Fluid Solvent. As expansion occurs so that the Dense Fluid Solvent transforms to a gas PGSS type processes may atomise these droplets.

The invention will now be described by way of example only with reference to:
Fig. 1 which shows a typical pressure/entropy phase diagram of a single chemical species which could be used as a dense fluid solvent, e.g. carbon dioxide.
Fig. 2 which diagramatically shows an apparatus for carrying out the process of the invention.
Fig. 3 which shows a pressure release valve for carrying out the process of this invention.
Fig 4 which shows schematically an apparatus for a RESS process using the valve of Fig. 3.

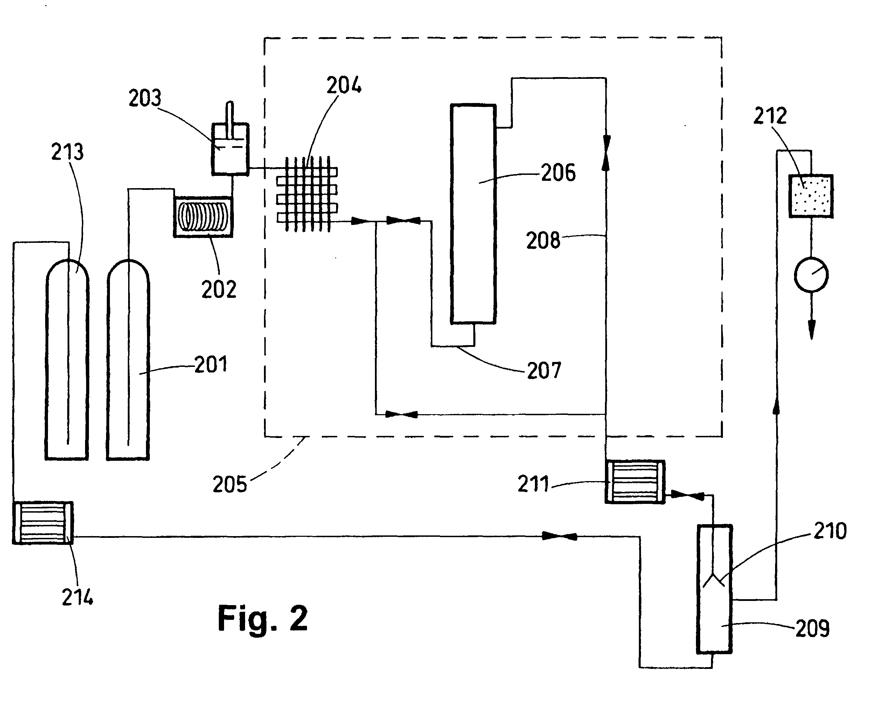

Referring to Fig. 2 an apparatus for conducting the process of the invention is shown. The equipment consists of a solvent delivery section, an extraction section and a precipitation section. The equipment can be used for solubility measurement, RESS to ambient pressure and RESS to elevated pressures.

**Solvent Delivery:** Carbon dioxide (BOC™ Chemically Pure grade) is withdrawn as a liquid from the supply cylinder 201, passed through refrigeration unit 202 and brought to the desired pressure by pump 203. The high pressure carbon dioxide stream is heated to the required temperature in heater 204 (6mm O.D. x 3m coil which is inside an air bath 205).

**Extraction Section:** Vessel 206 (0.51 internal volume) is loaded with 40g of solute, and carbon dioxide as above is delivered to the vessel 206 via flow path 207. The carbon dioxide passes through vessel 206, dissolves the solute and thus forms the Dense Fluid solution.

**Precipitating Section:** The so-formed solution then flows along flow path 208 toward an expansion region being vessel 209. The solution is then expanded to a pressure lower than that of extraction through an expansion device 210. In this case an orifice plate nozzle of diameter 50 µm and length 50 µm was used. Solution temperatures could be regulated prior to expansion (i.e. the pre-expansion temperature) using heat exchanger 211, which is a fluid jacket or other suitable heat transfer device around the flow path pipework between vessel 206 and the entrance to expansion vessel 209.

The pressure inside the vessel 209 and the pre-expansion temperature are controlled so as to cause the expanding dense fluid solvent to enter a region where it becomes a vapour/liquid mixture or a solid/vapour mixture according to the expansion path 106 shown in Fig. 1. As the solution expands, precipitation of the dissolved solute takes place, and the solute settles out in vessel 209. Alternatively the precipitating solute can be collected in a separator 212.

A hot gas, e.g. in this case carbon dioxide can be passed into vessel 209 from storage vessel 213 through heat exchanger 214. This will control the background temperature into which the fluid is expanding. Additional temperature control can be applied to the expansion vessel 209 by other means such as a heating jacket (not shown).

### Results:

Studies were carried out on the drug compound Denbufylline (supplied by SmithKline Beecham plc). As supplied this compound was in the form of needle shaped crystals.

Preliminary experiments carried out using the known RESS process in which solutions of Denbufylline in supercritical carbon dioxide were expanded along a pathway through the phase diagram which led directly into the vapour phase region resulted in precipitated Denbufylline product which appeared to have wholly or partly degraded.

As a result the pre-expansion temperature was reduced so that the Denbufylline solution was expanded into the two-phase vapour + liquid region or the solid + vapour region , according to the process of this invention. The observed outcome of this modification was that the particle size, particle habit, porosity, crystal structure and bulk properties were all dramatically affected by the pressure to which the solution was expanded, i.e. the post expansion pressure. The post expansion pressures used in the RESS studies were either atmospheric pressure or elevated pressures in the range 10 - 30 bar gas pressure, i.e. looking specifically at 10, 20 and 30 bar gas pressure.

### Particle Size/Surface Area:

The particle size of the powders produced were characterised by specific surface area measurement. It was found that the specific surface area of the powders produced had a dependency on the post expansion pressure.

The lower the post expansion pressure, the higher the specific surface area of the powders. For example at post expansion pressures of 10-30 bar (1 bar corresponds to 1.0332 x 10⁴ kg/sq.m) gas pressure the specific surface area of the material was in the range 1.27 - 5.41 m³/g. At post expansion pressures of one atmosphere the specific surface area of the powder product was in the range 6.29 -12.75m³/g. Continuing on this line, dissolution measurements were carried out on powders produced at elevated pressures, powders produced at atmospheric pressure and the starting material. It was found from these measurements that the higher surface area material had a faster dissolution rate. Therefore by using the post expansion pressure to control the specific surface area of the powders, this parameter can possibly be used to ultimately control the activity of the drug.

### Particle Habit:

Throughout this work Denbufylline was produced by RESS in two main forms, an isometric form and an acicular or fibrous form. Generally speaking it was found that when the supercritical solution was expanded to atmospheric pressure the most isometric form as the dominant habit of the particles was obtained. When the solution was expanded to elevated pressures (say 10-30 bar gas pressure) the acicular or fibrous form was obtained as the dominant habit. Therefore it would seem that the habit can be controlled using the post expansion pressure.

### Porosity:

Porosity measurements were carried out on some selected samples of both the isometric and acicular material produced by RESS and the original Denbufylline. The porosity measurements made on these selected samples showed that material formed by RESS to elevated pressures (the acicular material) is not very porous (very like the starting material) and any pores are in the size range 10-25 Angstroms. The material formed by RESS to atmospheric pressure had a continuous range of pore sizes ranging from 10-300 Angstroms.

### Bulk Powder Properties (Density and Flowability):

By changing the post expansion pressure it was found that the bulk powder properties of the powders produced could be altered, the particular properties being the bulk density of the powder and the flowability of the powder.

When the solution was expanded to elevated pressures (10-30 bar gas pressure) the powder product had a very low bulk density, a " woolly" appearance and very poor flow properties. On expansion atmospheric pressure it was found that the powder had a relatively large bulk density (at least six times as large as that material produced at elevated pressures), a granular appearance and good flow properties when compared to the starting material and material produced at elevated pressures. These bulk properties could be related to the habit of the material making up the powder. The poor flowing, low density material having a fibrous habit and the more dense, free flowing material having a more granular or isometric habit. Regardless of this we can say the following. The post expansion pressure can be used to control bulk powder properties.

The Hausner ratio of both original Denbufylline as supplied and Denbufylline treated by the RESS process of the invention as described above was measured. The Hausner ratio of Denbufylline as supplied was 2.05, and for all RESS-processed material prepared using the process of the invention was lower than this, being in the range 1.47 - 1.85. This indicates an increase in the granularity of the powder.

### Crystal Form of the product:

Crystallographic studies were carried out on RESS produced powders using X-ray diffraction, Differential Scanning Calorimetry and Infra-Red Spectroscopy. These results showed that powders produced by expansion of the Dense Fluid Solution to atmospheric pressure produced material with a crystal form believed to be identical to the starting material, which is also believed to be the most stable and commonly occurring form of the solute. Expansions to elevated pressures of 10, 20 and 30 bar resulted in the material being precipitated in a variety of new crystal forms (or polymorphs). These results indicate that the crystal form of the recrystallised material can be controlled by controlling the post expansion temperature and/or pressure.

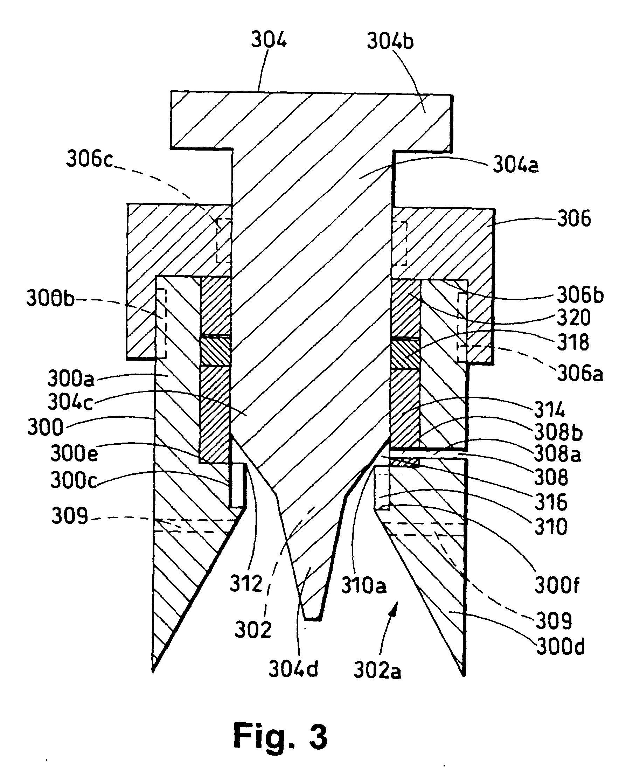

Referring to Fig 3, a pressure-relief valve comprises a cylindrical body 300 having a passage 302 extending therethrough, a valve stem 304 axially and rotatably moveable in the passage 302 and a retaining nut 306.

The body 300 has a first annular portion 300a with an externally screw-threaded region 300b, a second annular portion 300c and an internally flared portion 300d, all of unitary construction. The first annular portion 300a is connected to the second annular portion 300c by an inwardly stepped region, so forming a first annular surface 300e. Between the second annular portion 300c and the portion 300d, an inwardly extending lip forms a second annular surface 300f. The portion 300d defines a frusto-conically flared outlet 302a of the valve. A first flow passage 308a extends through the second annular portion 300a and defines a part of a valve inlet 308, and a pair of additional flow passages 309 extend through the portion 300d into the outlet 302a of the valve.

A cylindrical region 304a of the valve stem 304 is externally screw-threaded over part of its length and has a manual control knob 304b at its outer end. However, the manual control knob may be replaced by a pneumatic or electrical controller such as is commonly used to control other types of valves. The valve stem 304 has a first and second frusto-conical tapering regions 304c and 304d at its inner end. The valve stem 304 is positioned in the passage 302 though the valve body 300 such that the tapered end 304d of the valve stem 304 is located in the outlet 302a of the valve. Movement of the valve stem 304 towards the outlet 302a is limited by an annular seat 310 which rests on the second annular surface 300f of the body 300 and is a close fit within the annular region 300c of the body 300. The inner diameter of the annular seat 310 corresponds to the minimum diameter of the outlet 302a, so that no part of the annular surface 300f projects into the flowpath. It should be noted that, in use, a gap which defines an expansion or pressure-relief annular orifice 312 will be maintained between a sealing edge 310a of the seat 310 and the region 304c of the valve stem 304. As a result of the positioning of the seat 310 relative to the region 300d of the body 300, there exists an uninterrupted linear flowpath from each point in the orifice 312 though the seat 310 into the outlet 302a.

Correct positioning of the valve stem 304 is facilitated by an annular guide 314 which is seated on the first annular surface 300e of the valve body 300. The guide 314 has a flow passage 308b therethrough which is aligned with the first flow passage 308a so forming part of the valve inlet 308. A flow chamber 316 is defined between the valve stem 304, annular seat 310 and guide 314. It should be noted that the effective flow area of the inlet 308 is sufficiently large such that, in use, a significant pressure drop (and hence premature separation of substance from solution) does not occur as fluid enters the flow chamber 316.

Although not shown in this embodiment, the sealing edge 31 0a of the seat 310 may be chamfered so that, in use, accretion of solid substance in the flow chamber 316 is less likely.

Seated on the guide 314, successively, are an annular packing seal 318 and an annular backing ring 320. The elements of the valve are held together by the retaining nut 306. The retaining nut 306 has a first internally screw-threaded region 306a which engages with the screw-threaded region 300b of the body 300 so that a lower surface 306b of the nut 306 abuts the seal backing ring 320, and a second internally screw-threaded region 306c which engages with the screw-threaded region of the valve stem 304.

In use, a solution of a solid solute in a Dense Fluid Solvent such as supercritical carbon dioxide enters the valve through the valve inlet 308 and passes into the flow chamber 316. From there it passes through the orifice 312 where it is rapidly expanded such that the solute separates from the solution in the outlet 302a to form small crystals. The rate of flow through the valve is adjusted manually (or mechanically in the case where a controller is provided as mentioned hereinbefore) by appropriate rotation of the knob 304b to effect axial adjustment of the region 304c relative to the valve seat 310. Accretion of solid product on the valve stem 304 or body 300 downstream of the orifice 312 can be removed by injecting pulses of pressurized gas e.g. carbon dioxide into the outlet 302a through the additional flow passages 309. The temperature of the gas passing through the additional flow passages 309 may be controlled. As an alternative to the use of carbon dioxide, another gas such as nitrogen or even compressed air may be employed for this purpose. The gas introduced through the flow passages 309 may be heated to enable the temperature within for example a downstream expansion vessel (not shown in Fig. 3) to be controlled to assist in evaporating any liquefied gas resulting from expansion of the former Dense Fluid Solvent, e.g. carbon dioxide, or in subliming any solidified gas which may form as a result of expansion.

Although not required in this embodiment, the additional flow passages 309 may be used to supply material dissolved or suspended in a fluid such that the material is deposited on the substance being processed. Thus, the apparatus described above can be used to purify substances at a high concentration and flow rate, maintaining a steady flow even under unpredictable non-ideal flow conditions, without blockage of the valve.

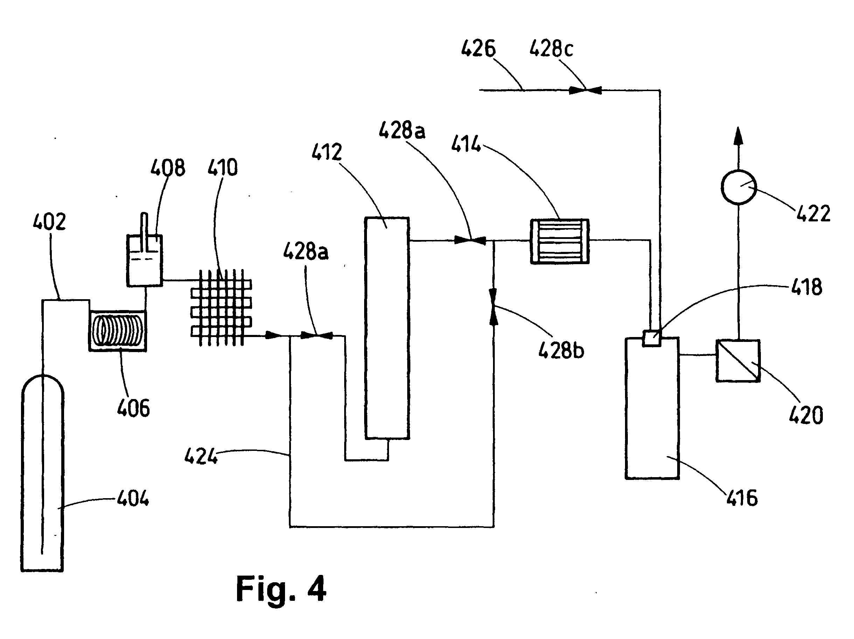

Referring to Fig. 4 a schematic representation of a further apparatus for carrying out the process of the invention is shown. A flowpath 402 extends from a carbon dioxide storage cylinder 404 successively through a refrigeration unit 406, a compressor pump 408, a heat exchanger 410, an extraction vessel 412, a second heat exchanger 414, an expansion vessel 416 fitted with a pressure-relief valve 418, being a pressure relief valve as shown in and described above with reference to Fig. 3, a filter 420 and a flow meter 422. A second flow path 424 bypasses the extraction vessel 412. A purge gas supply line 426 is connected with the pressure-relief valve 418. At various locations along the flow paths 402, 424 and 426 are located control valves 428a, 428b and 428c respectively.

In use, carbon dioxide maintained at 50 bar is withdrawn from the storage cylinder 404 and liquefied by cooling to between -4 and +4°C in the refrigeration unit 406. The resultant liquid carbon dioxide is compressed to the desired system operating pressure (typically 60 to 350 bar) by the pump 408 and brought to the system operating temperature by passing through the heat exchanger 410. The carbon dioxide is passed upwardly through the extraction vessel 412 which contains a solute substance in a packed bed, resulting in dissolution of the solute in the carbon dioxide. The concentration of the solution may be reduced by diluting with fresh liquid carbon dioxide via flow path 424, by appropriate setting of the valves 428a and 428b.

The second heat exchanger 414 brings the solution to the required temperature, before being passed through the pressure-relief valve 418. The drop in pressure in the pressure relief valve results in rapid expansion of the carbon dioxide e.g. from 150 bar gas pressure upstream of the pressure relief valve to ca. 1 bar atmosphere pressure in the expansion vessel 416. The purge gas supply line 426 feeds gaseous carbon dioxide from a reservoir at a pressure of for example 150 bar gas pressure under the control of the valve 428c, to the pressure-relief valve 418. The control valve 428c allows the carbon dioxide to expand to the pressure of the expansion vessel 416 whatever pressure drop occurs in the pipework between the valve 428c and the valve 418. During the expansion, the solvating power of the carbon dioxide is reduced and substances dissolved therein precipitate as small crystals of substantially uniform size. Separation is easily achieved because the solid product settles in the expansion vessel 416 and the now gaseous carbon dioxide passes out of the expansion vessel 416 to be scrubbed by the filter 420. Under these rapid expansion conditions, some solid carbon dioxide may be formed but, if it does, then it rapidly sublimes. The flow rate of the gaseous carbon dioxide is measured by the flow meter 422 to facilitate overall control of the process, and is vented to the atmosphere, as shown, it is also possible, however, for the carbon dioxide to be continuously recycled back to the start of the process.

## Claims

1. A process for the precipitation of a solid solute from a Dense Fluid Solvent, comprising by the steps of:
forming a solution of the solute in the Dense Fluid Solvent;
then expanding the solution so formed under conditions such that the Dense Fluid Solvent passes from the Dense Fluid Solvent region (103B) of its phase diagram into a solid + vapour or liquid + vapour region (101, 102) of its phase diagram, and wherein precipitation of the solute from the solution occurs while the solvent is in the solid + vapour or liquid + vapour region,
then isolating the precipitated solid solute by causing the solvent to evaporate into vapour.

2. Process according to claim 1 ***characterised* in that** the Dense Fluid Solvent is selected from carbon dioxide, ethane, ethylene, propane, fluorocarbons, and water, under appropriate physical conditions to be in a supercritical fluid state.

3. Process according to any one of claims 1 or 2 ***characterised* in that** the conditions under which the solution is expanded are such that the first condensable fraction of solute material is the solute in a molten state.

4. Process according to claim 3 ***characterised* in that** the temperature of the solution is above the melting point of the solute at the pressure of the solution.

5. Process according to any one of claims 1 to 4 ***characterised* in that** the solution enters a solid + vapour region (101) on expansion.

6. Process according to any one of the preceding claims ***characterised* by** expanding the solution under conditions such that the solvent expands in a manner that is or approximates to an isenthalpic pathway.

7. Process according to any one of the preceding claims ***characterised* in that** the pathway the solution follows through the temperature/entropy phase diagram of the Dense Fluid Solvent is controlled by the post-expansion pressure.

8. Process according to claim 7 ***characterised* in that** the Dense Fluid Solvent is carbon dioxide and the post expansion pressure is in the range 1-50 bar.

9. Process for modification of the physical form of a solute in which the solute is initially in a first physical form, is subjected in this first form to the process according to any one of the preceding claims, and is finally in a second physical form.

10. An apparatus for carrying out a process as claimed in claim 1 comprising means (408) for pressurising a Dense Fluid Solvent; means (412) for dissolving the solute in the Dense Fluid Solvent so as to form a solution; a flow path between said pressurising (408) and said dissolving (412) means; an expansion device (418) through which the solution may pass and may expand on the downstream side of the device; a flow path between said dissolving means and the expansion device; an expansion vessel (416) which incorporates an expansion region into which the solution can pass, the expansion region being downstream of the expansion device (418), wherein
the expansion device (418) comprises a pressure-relief valve (418) having a body (300), an inlet (308) for said solution, an outlet (302a), a flow passage (308a) defined by an inner surface of said body (300) extending between said inlet (308) and , outlet (302a), a pressure-relief orifice (312) located within said flow passage (308a), and means (304b) for varying the effective flow area of the orifice (312), wherein the orifice (312) and outlet (302a) are mutually disposed such that the orifice (312) faces the outlet (302a) and from each point in the effective flow area of the orifice (312), there is a substantially uninterrupted linear flow path through the outlet (302a).

11. Apparatus according to claim 10 ***characterised* in that** the outlet (302a) of the pressure-relief valve (418) is flared such that its effective flow area increases away from the orifice (312).

12. Apparatus according to claim 10 or 11 ***characterised* in that** the pressure-relief valve (418) is provided with at least one additional inlet (309) in the outlet (302a) of the body (300).

13. Apparatus according to any one of claims 10 to 12 ***characterised* in that** the pressure-relief valve (418) is provided with a valve stem (304) and a valve seat (310), the valve stem (304) being aligned with the outlet (302a), so that the pressure-relief orifice (312) is defined therebetween, and the valve stem (304) and valve seat (310) being moveable relative to each other so defining the means for varying the effective flow area of the pressure relief valve (418).

14. Apparatus according to claim 13 ***characterised* in that** the valve stem (304) may be reciprocated relative to the orifice (312) to generate shock waves in the flow path thereby to dislodge any accreted substance.

## Patentansprüche

1. Verfahren zur Abscheidung eines gelösten Feststoffs aus einem dichten Fluidlösemittel mit den Schritten:
Bilden einer Lösung des gelösten Stoffs in dem dichten Fluidlösemittel;
anschließendes Expandieren der derartig ausgebildeten Lösung unter den Bedingungen, daß das dichte Fluidlösemittel aus dem dichten Fluidlösemittelbereich (103B) seines Phasendiagramms in einem Fest+Dampf- oder Flüssig+Dampf-Bereich (101, 102) seines Phasendiagramms übergeht und wobei die Abscheidung des gelösten Stoffs aus der Lösung erfolgt, während das Lösemittel im Fest+Dampf- oder Flüssig+Dampf-Bereich ist,
anschließendes Trennen des abgeschiedenen gelösten Feststoffs, indem bewirkt wird, daß das Lösemittel zu Dampf verdampft.

2. Verfahren nach Anspruch 1, **dadurch gekennzeichnet, daß** das dichte Fluidlösemittel aus Kohlendioxid, Ethan, Ethylen, Propan, Fluorkohlenstoff und Wasser unter entsprechenden physikalischen Bedingungen ausgewählt ist, um in einem überkritischen Fluidzustand zu sein.

3. Verfahren nach einem der Ansprüche 1 bis 2, **dadurch gekennzeichnet, daß** die Bedingungen, unter denen die Lösung expandiert wird, derartig sind, daß die erste verdichtbare Fraktion des gelösten Materials der gelöste Stoff in einem geschmolzenen Zustand ist.

4. Verfahren nach Anspruch 3, **dadurch gekennzeichnet, daß** die Temperatur der Lösung über dem Schmelzpunkt des gelösten Stoffs beim Druck der Lösung ist.

5. Verfahren nach einem der Ansprüche 1 bis 4, **dadurch gekennzeichnet, daß** die Lösung nach der Expansion in einen Fest+Dampf-Bereich (101) eintritt.

6. Verfahren nach einem der vorhergehenden Ansprüche, **gekennzeichnet durch** den Schritt: Expandieren der Lösung unter solchen Bedingungen, daß das Lösemittel auf einem isenthalpischen Reaktionsweg oder einem angenähert isenthalpischen Reaktionsweg expandiert.

7. Verfahren nach einem der vorhergehenden Ansprüche, **dadurch gekennzeichnet, daß** der Reaktionsweg, den die Lösung durch das Temperatur/Entropy-Phasendiagramm des dichten Fluidlösemittels nimmt, durch den Postexpansionsdruck gesteuert wird.

8. Verfahren nach Anspruch 7, **dadurch gekennzeichnet, daß** das dichte Fluidlösemittel Kohlendioxid ist und der Postexpansionsdruck im Bereich von 1 bis 50 Bar liegt.

9. Verfahren zur Modifikation der physikalischen Form eines gelösten Stoffs, bei der der gelöste Stoff anfänglich eine erste physikalische Form hat, in dieser ersten Form dem Verfahren nach einem der vorhergehenden Ansprüche unterzogen wird und schließlich eine zweite physikalische Form hat.

10. Vorrichtung zur Durchführung eines Verfahrens nach Anspruch 1 mit einer Einrichtung (408) zur Druckbeaufschlagung eines dichten Fluidlösemittels; einer Einrichtung (412) zum Lösen des gelösten Stoffs in dem dichten Fluidlösemittel, um eine Lösung zu bilden; einem Durchflußweg zwischen der Druckbeaufschlagungs- (408) und der Lösungseinrichtung (412); einer Expansionsvorrichtung (418), durch die eine Lösung strömen und auf der abströmenden Seite der Vorrichtung expandieren kann; einem Durchflußweg zwischen der Lösungseinrichtung und der Expansionsvorrichtung; einem Expansionsgefäß (416), das einen Expansionsbereich einschließt, in den die Lösung strömen kann, wobei der Expansionsbereich in Strömungsrichtung hinter der Expansionsvorrichtung (418) ist, wobei
die Expansionsvorrichtung (418) aufweist: ein Druckbegrenzungsventil (418) mit einem Körper (300), einem Einlaß (308) für die Lösung, einem Auslaß (302a), einem Stromdurchgang (308a), der durch eine Innenfläche des Körpers (300) gebildet wird und der sich zwischen dem Einlaß (308) und dem Auslaß (302a) erstreckt, einer Druckbegrenzungsöffnung (312), die in dem Stromdurchgang (308a) angeordnet ist, und einer Einrichtung (304b) zur Änderung des effektiven Durchflußquerschnitts der Öffnung (312), wobei die Öffnung (312) und der Auslaß (302a) derartig zueinander angeordnet sind, daß die Öffnung (312) dem Auslaß (302a) zugewandt ist und von jedem Punkt im effektiven Durchflußquerschnitt der Öffnung (312) ein im wesentlichen ununterbrochener linearer Durchflußweg durch den Auslaß (302a) besteht.

11. Vorrichtung nach Anspruch 10, **dadurch gekennzeichnet, daß** der Auslaß (302a) des Druckbegrenzungsventils (418) derartig konisch erweitert ist, daß sich der effektive Durchflußquerschnitt von der Öffnung (312) weg vergrößert.

12. Vorrichtung nach Anspruch 10 oder 11, **dadurch gekennzeichnet, daß** das Druckbegrenzungsventil (418) mit mindestens einem zusätzlichen Einlaß (309) in dem Auslaß (302a) des Körpers (300) versehen ist.

13. Vorrichtung nach einem der Ansprüche 10 bis 12, **dadurch gekennzeichnet, daß** das Druckbegrenzungsventil (418) mit einem Ventilschaft (304) und einem Ventilsitz (310) versehen ist, wobei der Ventilschaft (304) mit dem Auslaß (302a) ausgerichtet ist, so daß die Druckbegrenzungsöffnung (312) zwischen ihnen gebildet wird und der Ventilschaft (304) und der Ventilsitz (310) relativ zueinander beweglich sind und somit die Einrichtung zum Ändern des effektiven Durchflußquerschnitts des Druckbegrenzungsventils (418) gebildet wird.

14. Vorrichtung nach Anspruch 13, **dadurch gekennzeichnet, daß** der Ventilschaft (304) relativ zur Öffnung (312) hinund herbewegt werden kann, um Verdichtungswellen im Durchflußweg zu erzeugen und dadurch jede angelagerte Substanz zu verdrängen.

## Revendications

1. Procédé pour la précipitation d'un soluté solide à partir d'un solvant fluide dense, comprenant les étapes consistant :
à former une solution du soluté dans le solvant fluide dense ;
puis à provoquer l'expansion de la solution ainsi formée dans des conditions telles que le solvant fluide dense passe de la région de solvant fluide dense (103B) de son diagramme de phases dans une région de solide + vapeur ou liquide + vapeur (101, 102) de son diagramme de phases, la précipitation du soluté à partir de la solution se produisant tandis que le solvant est dans la région de solide + vapeur ou liquide + vapeur,
puis à isoler le soluté solide précipité en provoquant l'évaporation du solvant en une vapeur.

2. Procédé suivant la revendication 1, **caractérisé en ce que** le solvant fluide dense est choisi entre le dioxyde de carbone, l'éthane, l'éthylène, le propane, des hydrocarbures fluorés et l'eau, dans des conditions physiques appropriées pour être à l'état de fluide surcritique.

3. Procédé suivant l'une quelconque des revendications 1 et 2, **caractérisé en ce que** les conditions dans lesquelles l'expansion de la solution est effectuée sont telles que la première fraction condensable de matière de soluté soit le soluté à l'état fondu.

4. Procédé suivant la revendication 3, **caractérisé en ce que** la température de la solution est supérieure au point de fusion du soluté à la pression de la solution.

5. Procédé suivant l'une quelconque des revendications 1 à 4, **caractérisé en ce que** la solution pénètre dans une région de solide + vapeur (101) lors de son expansion.

6. Procédé suivant l'une quelconque des revendications précédentes, **caractérisé par** l'expansion de la solution dans des conditions telles que le solvant subisse une expansion d'une manière qui correspond à une, ou est proche d'une, voie isenthalpique.

7. Procédé suivant l'une quelconque des revendications précédentes, **caractérisé en ce que** la voie que suit la solution à travers le diagramme de phases température/entropie du solvant fluide dense est commandée par la pression de post-expansion.

8. Procédé suivant la revendication 7, **caractérisé en ce que** le solvant fluide dense est le dioxyde de carbone et la pression de post-expansion est comprise dans l'intervalle de 1 à 50 bars.

9. Procédé pour la modification de la forme physique d'un soluté, dans lequel le soluté est initialement sous une première forme physique et est soumis sous cette première forme au procédé suivant l'une quelconque des revendications précédentes et est finalement sous une seconde forme physique.

10. Appareil pour la mise en oeuvre d'un procédé suivant la revendication 1, comprenant un moyen (408) pour la mise sous pression d'un solvant fluide dense ; un moyen (412) pour la dissolution du soluté dans le solvant fluide dense de manière à former une solution ; un trajet d'écoulement entre ledit moyen de mise sous pression (408) et ledit moyen de dissolution (412) ; un dispositif d'expansion (418) à travers lequel la solution peut passer et peut subir une expansion du côté aval du dispositif ; un trajet d'écoulement entre ledit moyen de dissolution et le dispositif d'expansion ; un récipient d'expansion (416) qui renferme une région d'expansion dans laquelle la solution peut passer, la région d'expansion étant en aval du dispositif d'expansion (418), dans lequel
le dispositif d'expansion (418) comprend une soupape de libération de pression (418) ayant un corps (300), un orifice d'admission (308) pour ladite solution, un orifice de sortie (302a), un passage d'écoulement (308a) défini par une surface intérieure dudit corps (300) s'étendant entre l'orifice d'admission (308) et l'orifice de sortie (302a), un orifice de libération de pression (312) situé dans ledit passage d'écoulement (308a) et un moyen (304b) pour faire varier la surface d'écoulement efficace de l'orifice (312), l'orifice (312) et l'orifice de sortie (302a) étant disposés mutuellement de telle sorte que l'orifice (312) soit face à l'orifice de sortie (302a) et, à partir de chaque point dans la surface efficace d'écoulement de l'orifice (312), il existe un trajet d'écoulement linéaire pratiquement ininterrompu à travers l'orifice de sortie (302a).

11. Appareil suivant la revendication 10, **caractérisé en ce que** l'orifice de sortie (302a) de la soupape de libération de pression (418) est évasé de telle sorte que sa surface d'écoulement efficace augmente à distance de l'orifice (312).

12. Appareil suivant la revendication 10 ou 11, **caractérisé en ce que** la soupape de libération de pression (418) est munie d'au moins un orifice d'admission supplémentaire (309) dans l'orifice de sortie (302a) du corps (300).

13. Appareil suivant l'une quelconque des revendications 10 à 12, **caractérisé en ce que** la soupape de libération de pression (418) est munie d'une tige de soupape (304) et d'un siège de soupape (310), la tige de soupape étant alignée avec l'orifice de sortie (302a), de telle sorte que l'orifice de libération de pression (312) soit défini entre eux, et la tige de soupape (304) et le siège de soupape (310) étant mobiles l'un par rapport à l'autre de manière à définir le moyen pour faire varier la surface d'écoulement efficace de la soupape de libération de pression (418).

14. Appareil suivant la revendication 13, **caractérisé en ce que** la tige de soupape (304) peut être soumise à un mouvement alternatif par rapport à l'orifice (312) pour engendrer des ondes de choc dans le trajet d'écoulement, en délogeant ainsi toute substance présentant une accrétion.
